# EUROPÄISCHE PATENTSCHRIFT

(11) **EP 1 335 161 B1**
(45) Veröffentlichungstag und Bekanntmachung des Hinweises auf die Patenterteilung: **27.04.2005**
(21) Anmeldenummer: 03001161.3
(22) Anmeldetag: 21.01.2003
(51) Int. Cl.: F16L 37/084

(54) **Aufnahmeteil einer Fluid-Steckkupplung**
Receiving part of a fluid plug-in coupling
Partie réceptrice d'un raccord fluide enfichable

(30) Priorität: 02.02.2002 DE 20201574 U
(43) Veröffentlichungstag der Anmeldung: 13.08.2003
(73) Patentinhaber: Voss Automotive GmbH, 51688 Wipperfürth (DE)
(72) Erfinder: Kaminski, Volker, 58553 Halver (DE); Serdaris, Jannis, 51643 Gummersbach (DE); Terlau, Norbert, 51515 Kürten (DE); Zenses, Frank, 50354 Hürth (DE)
(74) Vertreter: Patentanwälte Dr. Solf & Zapf

(56) Entgegenhaltungen:
- GB-A- 2 178 501
- US-A- 5 056 756
- US-A- 5 161 834
- US-A- 5 472 016
- US-A- 5 542 717

## Beschreibung

Die vorliegende Erfindung betrifft ein Aufnahmeteil einer Fluid-Steckkupplung (wobei sich der Begriff "Fluid" auf beliebige, hydraulische oder gasförmige Strömungsmedien bezieht) gemäß dem Oberbegriff des Patentanspruchs 1.

Ein derartiges Aufnahmeteil ist beispielsweise aus dem Dokument US-A-5 161 834 bekannt. Die Abschlußbuchse ist als umfänglich geschlossenes, im Wesentlichen hohlzylindrisches Teil ausgebildet, so dass die Verrastung im Gehäuse mit geschlossenem Linienverlauf ausgeführt ist. Die Montage kann daher nur unter elastischer Aufweitung des Gehäuses und/oder elastischer Verengung der Abschlußbuchse erfolgen. Das Halteelement ist innerhalb des Gehäuses axial abgestützt, und das Steckerteil gelangt zur Einsteckbegrenzung mit seinem radialen Ringansatz zur axialen Anlage an einem radial nach innen ragenden Ringsteg des Halteelements.

Einen ähnlichen Stand der Technik beschreibt auch jedes der Dokumente US-A-5 056 756, US-A-5 472 016 und US-A-5 542 717.

Die GB-A-2 178 501 beschreibt eine nicht gattungsgemäße Rohrkupplung, wobei Dichtungsanordnungen in einem Gehäuse mittels Ringklammem nach Art von Sprengringen gehalten werden. Die Ringklammem fixieren zusätzlich zu den Dichtungen auch Halteelemente in Form von Zahnringen, die mit schräg axial und radial nach innen ragenden Zähnen jeweils direkt in die Umfangsfläche des von einem Rohrende gebildeten Steckerteils eingreifen. Es handelt sich somit nicht um eine Verrastung; die Rohrenden weisen auch keine radialen Ringansätze auf. Zudem ist zum Lösen auch kein Löseelement vorhanden, sondern es muß die jeweilige Ringklammer demontiert werden, um das Rohr zusammen mit dem Zahnring und der Dichtungsanordnung entnehmen zu können.

Die EP 0 485 214 B1 beschreibt ein Aufnahmeteil, bei dem die Abschlußbuchse in dem Muffengehäuse durch axiale Anlage an einem Halteelement fixiert wird. Das Halteelement ist als Blech-Stanzbiegeteil in einem erweiterten Bereich des Muffengehäuses gelagert und weist zum Arretieren eines eingesteckten Steckerteils radial federelastische Rastarme auf, die eine radiale Haltestufe des Steckerteils rastend hintergreifen. An seinem der Abschlußbuchse zugekehrten Endbereich weist das Halteelement einen radial nach innen abgewinkelten Steg zur fixierenden Anlage an der Abschlußbuchse auf. Bei dieser Ausführung ist die Dichtungsanordnung, die aus zwei O-Ringen und einer dazwischen liegenden Distanzbuchse besteht, über die Abschlußbuchse erst dann im Muffengehäuse fixiert, wenn das Halteelement eingesetzt ist. Zudem kann es aufgrund von insbesondere bei dem Blech-Halteelement unvermeidbaren Herstellungstoleranzen im Bereich der Dichtungsanordnung zu einem nachteiligen Axialspiel kommen.

Einen sehr ähnlichen oder zum Teil praktisch gleichartigen Stand der Technik offenbaren auch die Dokumente US 4 979 765, US 4 944 536, US 4 846 506 und US 4 691 943, wobei gemäß dem zuletzt genannten Dokument auch die Abschlußbuchse als Blechformteil ausgebildet ist.

Der vorliegenden Erfindung liegt die Aufgabe zugrunde, ein Aufnahmeteil der genannten Art so zu verbessern, dass die Montage der Abschlußbuchse ohne Beeinträchtigung der Dichtwirkung und mit erhöhter Verbindungsfestigkeit erleichtert wird.

Erfindungsgemäß wird dies durch die Merkmale des Anspruchs 1 erreicht. Vorteilhafte Ausgestaltungen sind in den abhängigen Ansprüchen enthalten.

Die Schlitzunterbrechung der Abschlußbuchse führt im Bereich der Rastmittel zu einer radial elastischen Verformbarkeit, was die Verrastung erleichtert. Der zusätzliche Stützring weist eine durchgehende Anlagefläche für den benachbarten Dichtring auf, der dadurch gegen Eindrücken in die Schlitzunterbrechung der Abschlußbuchse und gegen daraus resultierende Beschädigungen geschützt ist. Durch die erfindungsgemäße Fixierung der Abschlußbuchse bildet diese auch einen axialen Anschlag zur Einsteckbegrenzung für das Steckerteil bzw. dessen Ringansatz.

Durch die direkte, von weiteren Einzelteilen unabhängige Arretierung der Abschlußbuchse im Muffengehäuse ist die gesamte Dichtungsanordnung schon sicher fixiert, noch bevor weitere Einzelteile, wie insbesondere ein Stecker-Halteelement, montiert sind. Dies erleichtert die weitere Montage, da ein Verrutschen oder gar ein vollständiges Herausrutschen von Teilen der Dichtungsanordnung vorteilhafterweise ausgeschlossen ist. Außerdem kann die Befestigung der Abschlußbuchse derart ortsgenau erfolgen, dass im Bereich der Dichtungsanordnung nahezu unabhängig von Herstellungstoleranzen stets optimale Dichtungseigenschaften gewährleistet sind.

Für die angestrebte einfache Montage ist als Arretiermittel eine Verrastung der Abschlußbuchse im Muffengehäuse vorgesehen. Hierdurch braucht lediglich die Abschlußbuchse axial in das Muffengehäuse eingesetzt zu werden, und die Arretierung erfolgt selbsttätig durch die Verrastung.

Anhand von bevorzugten, in der Zeichnung veranschaulichten Ausführungsbeispielen soll die Erfindung genauer erläutert werden. Dabei zeigen:
- Fig. 1: einen Axialschnitt einer Steckkupplung in einer ersten Ausführungsform des Aufnahmeteils mit eingestecktem Steckerteil,
- Fig. 2: eine Darstellung analog zu Fig. 1 in einer zweiten, erfindungsgemäßen Ausführungsform des Aufnahmeteils,
- Fig. 3: eine gesonderte, vergrößerte Schnittansicht (III - III gemäß Fig. 4) eines Einzelteils, d. h. einer Dichtungs-Abschlußbuchse, und
- Fig. 4: eine axiale Stirnansicht in Pfeilrichtung IV gemäß Fig. 3.

In den verschiedenen Figuren der Zeichnungen sind gleiche Teile stets mit den gleichen Bezugszeichen versehen.

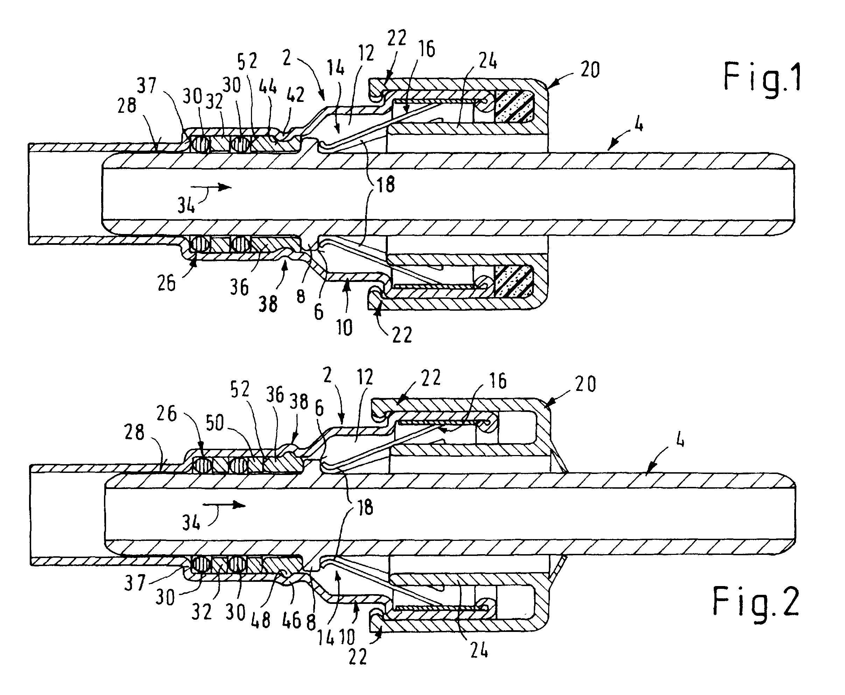

Wie sich zunächst aus Fig. 1 und 2 jeweils ergibt, besteht eine Steckkupplung aus einem Aufnahmeteil 2 und einem Steckerteil 4. Die Erfindung betrifft allerdings nur das Aufnahmeteil 2, während es sich bei dem Steckerteil 4 um eine normgemäße Ausführung (sog. SAE-Stecker) in Form eines Rohrstückes handelt, welches zur Bildung einer radialen Haltestufe 6 auf seinem Außenumfang einen Ringansatz 8 aufweist.

Das Aufnahmeteil 2 besteht aus einem Muffengehäuse 10 mit einer Einstecköffnung 12 für das Steckerteil 4 sowie mit einer Halteeinrichtung 14 zum lösbaren Fixieren des eingesteckten Steckerteils 4. Dazu weist die Halteeinrichtung 14 ein in dem Muffengehäuse 10 gelagertes Halteelement 16 auf, wobei dieses Halteelement 16 seinerseits radial elastisch verformbare Halteabschnitte 18 zum rastenden Hintergreifen der Haltestufe 6 des Steckerteils 4 besitzt. Das Aufnahmeteil 2 weist weiterhin ein Löseelement 20 auf, welches außen auf dem Muffengehäuse 10 über Rastmittel 22 relativ zu dem Muffengehäuse 10 axial verschiebbar gehaltert ist. Dabei greift das Löseelement 20 mit einem inneren, hohlzylindrischen (hülsenförmigen) Löseabschnitt 24 in die Einstecköffnung 12 ein und wirkt hier zum Lösen des arretierten Steckerteils 4 gegen die Halteabschnitte 18 des Halteelementes 16.

Gemäß Fig. 1 und 2 ist weiterhin innerhalb des Muffengehäuses 10 eine Dichtungsanordnung 26 zum umfänglichen Abdichten auf dem Außenumfang 28 des eingesteckten Steckerteils 4 angeordnet. In den dargestellten Ausführungen besteht die Dichtungsanordnung 26 aus zwei Dichtringen 30 (insbesondere O-Ringe) und einem zwischen diesen angeordneten Distanzring 32.

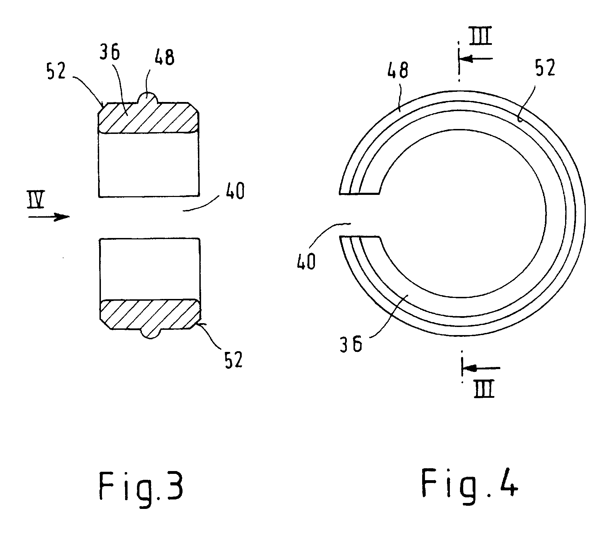

Diese Dichtungsanordnung 26 wird in dem Muffengehäuse 10 axial in Stecker-Entnahmerichtung (Pfeil 34) durch eine Abschlußbuchse 36 gehalten, wobei sie sich gegenüberliegend an einer radialen Stufe 37 im Muffengehäuse 10 in Stecker-Einsteckrichtung abstützt. Hierbei ist vorgesehen, dass die Abschlußbuchse 36 unmittelbar im Muffengehäuse 10 über Arretiermittel 38 axial fixiert gehalten ist. Als Arretiermittel 38 ist eine Verrastung der Abschlußbuchse 36 im Muffengehäuse 10 vorgesehen. Dazu ist die Abschlußbuchse 36 - vergleiche dazu Fig. 3 und 4 - durch eine durchgehende Schlitzunterbrechung 40 radial elastisch verformbar ausgebildet, wobei am Außenumfang der Abschlußbuchse 36 sowie im Innenumfang des Muffengehäuses 10 korrespondierende radiale Rastmittel vorgesehen sind. Hierzu ist in der Ausführung nach Fig. 1 vorgesehen, dass die Rastmittel aus einer radial nach innen vorspringenden, wulstartigen Ringerhebung 42 des Muffengehäuses 10 und einer radialen Ringvertiefung 44 der Abschlußbuchse 36 bestehen. Bei dieser Ausführung muß aufgrund der radial nach innen ragenden Ringerhebung 42 auch der Distanzring 32 zum Einsetzen durch eine Schlitzunterbrechung radial elastisch verformbar ausgebildet sein.

Im Gegensatz dazu ist bei der in dieser Hinsicht zu bevorzugenden Ausführung nach Fig. 2 vorgesehen, dass die Arretiermittel 38 aus einer radial nach außen gerichteten Ringvertiefung 46 im Muffengehäuse 10 und einer radialen, wulstartigen Ringerhebung 48 der Abschlußbuchse 36 bestehen. Bei dieser Ausführung ist von Vorteil, dass sich innerhalb des Muffengehäuses 10 ein freier Querschnitt zum Einsetzen der Bestandteile der Dichtungsanordnung 26 ergibt, so auch des Distanzrings 32, der hierdurch ungeschlitzt ausgebildet sein kann. Hierdurch ist eine durchgehende Anlagefläche für jeden Dichtring 30 vorhanden. Dabei ist zudem zwischen der Abschlußbuchse 36 und dem nächstliegenden Dichtring 30 ein zusätzlicher Stützring 50 angeordnet, der ebenfalls ungeschlitzt, umfänglich durchgehend ausgeführt ist. Hierdurch wird auch auf dieser Seite der Dichtring 30 gegen axiales Eindrücken in die Schlitzunterbrechung 40 der Abschlußbuchse 36 geschützt.

Um das Einsetzen der Abschlußbuchse 36 in das Muffengehäuse 10 zu erleichtern, weist die Abschlußbuchse 36 zumindest einseitig eine Fase als Einführschräge 52 auf (siehe auch Fig. 3 und 4), die selbsttätig die zum Verrasten erforderliche, elastische Radialverformung bewirkt.

Im Gegensatz zu den Ausführungen nach Fig. 1 und 2 kann gemäß Fig. 3 und 4 mit Vorteil vorgesehen sein, dass die Abschlußbuchse 36 bezüglich der Lage insbesondere ihrer Ringerhebung 48 (bzw. alternativ ihrer Ringvertiefung 44 nach Fig. 1) in axialer Richtung symmetrisch ausgebildet ist. Dies erleichtert die Montage, da beim Einsetzen nicht auf die Orientierung geachtet zu werden braucht. Dabei ist natürlich auf beiden Seiten eine Fase bzw. Einführschräge 52 vorhanden.

Durch ihre erfindungsgemäße Fixierung bildet die Abschlußbuchse 36 einen axialen Anschlag (Einsteckbegrenzung) für das Steckerteil 4 bzw. dessen Ringansatz 8. Dabei kann der Ringansatz 8 im Wesentlichen spielfrei zwischen der Abschlußbuchse 36 und den Halteabschnitten 18 des Halteelementes 16 gehalten sein.

Weitere Einzelheiten des Aufnahmeteils 2 sind auch in der prioritätsgleichen EP-Anmeldung 03001088.8 der Anmelderin (Veröffentlichungsnummer EP 1 351 006) beschrieben.

## Patentansprüche

1. Aufnahmeteil (2) einer Fluid-Steckkupplung, bestehend aus einem Muffengehäuse (10) mit einer Einstecköffnung (12) für ein Steckerteil (4) und einer in dem Muffengehäuse (10) angeordneten Dichtungsanordnung (26) für das eingesteckte Steckerteil (4) sowie mit einer Halteeinrichtung (14) zum lösbaren Fixieren des eingesteckten Steckerteils (4), wobei die Dichtungsanordnung (26) mittels einer über Arretiermittel (38) unmittelbar in dem Muffengehäuse (10) gehalterten Abschlußbuchse (36) axial in Entnahmerichtung des Steckerteils (4) fixiert ist, wobei als Arretiermittel (38) eine Verrastung der Abschlußbuchse (36) im Muffengehäuse (10) vorgesehen ist, und wobei die Halteeinrichtung (14) ein in dem Muffengehäuse (10) gelagertes Halteelement (16) mit radial elastisch verformbaren Halteabschnitten (18) zum rastenden Hintergreifen einer von einem radialen Ringansatz (8) des Steckerteils (4) gebildeten Haltestufe (6) sowie ein relativ zu dem Muffengehäuse (10) axial verschiebbares Löseelement (20) aufweist, welches mit einem in die Einstecköffnung (12) eingreifenden Löseabschnitt (24) zum Lösen des arretierten Steckerteils (4) gegen die Halteabschnitte (18) des Halteelements (16) wirkt,
**dadurch gekennzeichnet, dass** die Abschlußbuchse (36) durch eine durchgehende Schlitzunterbrechung (40) radial elastisch verformbar ausgebildet ist, wobei am Außenumfang der Abschlußbuchse (36) und im Innenumfang des Muffengehäuses (10) korrespondierende radiale Rastmittel gebildet sind, wobei zwischen der geschlitzten Abschlußbuchse (36) und einem Dichtring (30) ein ungeschlitzter, umfänglich durchgehender Stützring (50) angeordnet ist, und wobei die Abschlußbuchse (36) zur Einsteckbegrenzung für das Steckerteil (4) einen axialen Anschlag für dessen Ringansatz (8) bildet.

2. Aufnahmeteil nach Anspruch 1,
**dadurch gekennzeichnet, dass** die Arretiermittel (38) aus einer radial nach innen vorspringenden Ringerhebung (42) des Muffengehäuses (10) und einer radialen Ringvertiefung (44) der Abschlußbuchse (36) bestehen.

3. Aufnahmeteil nach Anspruch 1,
**dadurch gekennzeichnet, dass** die Arretiermittel (38) aus einer radial nach außen gerichteten Ringvertiefung (46) im Muffengehäuse (10) und einer radialen Ringerhebung (48) der Abschlußbuchse (36) bestehen.

4. Aufnahmeteil nach einem der Ansprüche 1 bis 3,
**dadurch gekennzeichnet, dass** die Dichtungsanordnung (26) zwei über einen Distanzring (32) beabstandete Dichtringe (30) aufweist.

5. Aufnahmeteil nach einem der Ansprüche 1 bis 4,
**dadurch gekennzeichnet, dass** sich die Dichtungsanordnung (26) auf ihrer der Abschlußbuchse (36) bzw. dem Stützring (50) axial gegenüberliegenden Seite an einer radialen Stufe (37) im Muffengehäuse (10) abstützt.

6. Aufnahmeteil nach einem der Ansprüche 1 bis 5,
**dadurch gekennzeichnet, dass** dasMuffengehäuse(10) einteilig aus einem umgeformten Rohrstück oder einer tiefgezogenen Ronde aus Metall gebildet ist.

## Claims

1. A receiving part (2) of a fluid plug-in coupling, comprising a sleeve casing (10) with an insertion opening (12) for a plug part (4) and a sealing device (26) arranged in the sleeve casing (10) for the inserted plug part (4) and with a holding device (14) for fixing the inserted plug part (4) in a detachable manner, wherein the sealing device (26) is fixed axially in the removal direction of the plug part (4) by means of a closure bush (36) held directly in the sleeve casing (10) by way of locking means (38), wherein a catch on the closure bush (36) in the sleeve casing (10) is provided as the locking means (38), and wherein the holding device (14) comprises a holding element (16), mounted in the sleeve casing (10) and with holding portions (18) deformable radially in a resilient manner for engaging in a locking manner behind a holding step (6) formed by a radial annular projection (8) on the plug part (4), and a releasing element (20) which is axially displaceable relative to the sleeve casing (10) and which, with a releasing portion (24) engaging in the insertion opening (12), acts against the holding portions (18) of the holding element (16) in order to release the locked plug part (4), **characterized in that** the closure bush (36) is made deformable radially in a resilient manner by a continuous slot opening (40), wherein corresponding radial catch means are formed on the external periphery of the closure bush (36) and in the internal periphery of the sleeve casing (10), wherein a support ring (50) continuous on the periphery and without a slot is arranged between the slotted closure bush (36) and a sealing ring (30), and wherein the closure bush (36) forms an axial stop for the annular projection (8) on the plug part (4) in order to limit the insertion of the said plug part (4).

2. A receiving part according to Claim 1, **characterized in that** the locking means (38) comprise an annular convex portion (42) projecting radially inwards on the sleeve casing (10) and a radial annular depression (44) in the closure bush (36).

3. A receiving part according to Claim 1, **characterized in that** the locking means (38) comprise an annular depression (46) directed radially outwards in the sleeve casing (10) and a radial annular convex portion (48) on the closure bush (36).

4. A receiving part according to any one of Claims 1 to 3, **characterized in that** the sealing device (26) comprises two sealing rings (30) spaced apart by a spacer ring (32).

5. A receiving part according to any one of Claims 1 to 4, **characterized in that** the side of the sealing device (26) axially opposite the closure bush (36) and the support ring (50) is supported on a radial step (37) in the sleeve casing (10).

6. A receiving part according to any one of Claims 1 to 5, **characterized in that** the sleeve casing (10) is formed from metal in one piece from a shaped tube member or a deep-drawn circular blank.

## Revendications

1. Partie femelle (2) d'un raccord de fluide à emmanchement, composée d'un boîtier (10) formant manchon muni d'une ouverture d'emmanchement (12) pour une partie mâle (4) et d'un dispositif d'étanchéité (26) disposé dans le boîtier formant manchon (10) pour la partie mâle (4) emmanchée, ainsi que d'un dispositif de retenue (14) destiné à immobiliser de façon amovible la partie mâle emmanchée (4), le dispositif d'étanchéité (26) étant immobilisé axialement dans le sens de l'emmanchement de la partie mâle (4) au moyen d'une douille de blocage (36) maintenue directement dans le boîtier formant manchon (10) par l'intermédiaire de moyens de blocage (38), dans laquelle il est prévu comme moyen de blocage (38) un enclenchement de la douille de blocage (36) dans le boîtier formant manchon (10), et dans laquelle le dispositif de retenue (14) comprend un élément de retenue (16) monté dans le boîtier formant manchon (10), possédant des segments de retenue (18) capables de se déformer élastiquement dans la direction radiale, qui sont destinés à accrocher par l'arrière un épaulement de retenue (6) formé par une saillie annulaire radiale (8) de la partie mâle (4) par enclenchement, ainsi qu'un élément de déverrouillage (20) qui peut se déplacer axialement par rapport au boîtier formant manchon (10) et qui agit, par un segment de déverrouillage (24) engagé dans l'orifice d'emmanchement (12), contre les segments de retenue (18) de l'élément de retenue (16) pour déverrouiller la partie mâle (4) bloquée,
**caractérisée en ce que** la douille de blocage (36) est rendue élastiquement déformable dans la direction radiale, par une interruption continue en forme de fente (40), moyennant quoi des moyens d'enclenchement radiaux correspondants sont formés sur la périphérie extérieure de la douille de blocage (36) et dans la périphérie intérieure du boîtier formant manchon (10), et une bague d'appui (50) non fendue, ininterrompue dans la direction circonférentielle, est disposée entre la douille de blocage fendue (36) et une bague d'étanchéité (30), et que, pour la limitation de l'emmanchement de la partie mâle (4), la douille de fermeture (36) forme une butée axiale pour la saillie annulaire (8) de cette partie.

2. Partie femelle selon la revendication 1,
**caractérisée en ce que** les moyens de blocage (38) sont constitués par une protubérance annulaire (42) du boîtier formant manchon (10) qui est en saillie radiale vers l'intérieur et un creux annulaire radial (44) de la douille de blocage (36).

3. Partie femelle selon la revendication 1, **caractérisée en ce que** les moyens de blocage (38) sont constitués par un creux annulaire (46) du boîtier formant manchon (10), qui est dirigé radialement vers l'extérieur, et par une protubérance annulaire radiale (48) de la douille de blocage (36).

4. Partie femelle selon une des revendications 1 à 3,
**caractérisée en ce que** le dispositif d'étanchéité (26) présente deux bagues d'étanchéité (30) maintenues espacées l'une de l'autre par une bague d'écartement (32).

5. Partie femelle selon une des revendications 1 à 4,
**caractérisée en ce que**, sur son côté qui est axialement à l'opposé de la douille de blocage (36) et de la bague d'appui (50), le dispositif d'étanchéité (26) prend appui contre un épaulement radial (37) à l'intérieur du boîtier formant manchon (10).

6. Partie femelle selon une des revendications 1 à 5,
**caractérisée en ce que** le boîtier formant manchon (10) est formé en une seule pièce à partir d'un tronçon de tube mis en forme ou d'une rondelle de métal emboutie.
